# EUROPEAN PATENT SPECIFICATION

(11) **EP 0 423 362 B1**
(45) Date of publication and mention of the grant of the patent: **03.08.1994**
(21) Application number: 90906340.6
(22) Date of filing: 20.04.1990
(51) Int. Cl.: F16K 17/04, F15B 11/02

(54) **COUNTERBALANCE VALVE**
AUSGLEICHSVENTIL
SOUPAPE D'EQUILIBRE

(30) Priority: 24.04.1989 JP 101708/89
(43) Date of publication of application: 24.04.1991
(73) Proprietor: KABUSHIKI KAISHA KOMATSU SEISAKUSHO, Minato-ku Tokyo 107 (JP)
(72) Inventor: "OSHIDA, Toshiyuki Komatsu Kawasaki Plant, Kanagawa 210 (JP)
(74) Representative: Meissner, Peter E., Dipl.-Ing.
(86) International application number: PCT/JP90/00516
(87) International publication number: WO 90/12973

(56) References cited:
- DE-A- 2 927 646
- DE-A- 2 949 657
- JP-U- 1 122 502
- JP-U-57 132 863

## Description

### Field of the Invention

The present invention relates to a counterbalance valve provided for drive oil hydraulic circuitry of an oil hydraulic motor used in travel equipment or the like for construction machinery.

### Background Art

Conventional drive oil hydraulic circuitry of an oil hydraulic motor, for example, as shown in Fig. 7, is known (see for example DE 2 949 657 A1).

In other words, more specifically, an operation valve 2 connects a delivery path 1a of an oil hydraulic pump 1 to a first main circuit 3 and a second main circuit 4, or the operation valve 2 disconnects the delivery path 1a from the first and second main circuits 3, 4. The first and second main circuits 3, 4 are respectively connected to a first port 6₁ and a second port 6₂ of an oil hydraulic motor 5. A counterbalance valve 7 is arranged between the first and second main circuits 3, 4. When the operation valve 2 is moved to a neutral position "N", because of non-return valves 8 placed in the first and second main circuits 3, 4, the side of the oil hydraulic motor 5 is disconnected from the counterbalance valve 7. Thus, the oil hydraulic motor 5 is not caused to rotate by an external force. When the operation valve 2 is moved to either a first position "I" or a second position "II", the counterbalance valve 7 is switched over to either the first position "I" or the second position "II", this switching being caused by highly pressurized oil in either the first main circuit 3 or the second main circuit 4.

The counterbalance valve 7 for use in such oil hydraulic circuitry is switched over to the first and second positions by highly pressurized oil in the first and second main circuits 3, 4. The counterbalance valve 7 returns to the neutral position "N" when the highly pressurized oil runs out.

When the oil hydraulic motor 5 comes to rest, it is caused to rotate by an external load, thereby acting as a pump.

For this reason, if the counterbalance valve 7 is in the neutral position "N" when the oil hydraulic motor 5 is at rest while the operation valve 2 is in the neutral position, either the first main circuit 3 or the second main circuit 4 becomes a high pressure circuit, thereby causing a great shock.

To moderate such a shock during cessation, the speed for the counterbalance valve 7 to return to the neutral position "N" from the first position and the second position is rendered slow. The counterbalance valve 7 throttles the pressurized oil in the first and second positions, thus causing it to flow to the tank 9.

For example, throttles 11, 11 are arranged in circuits 10, 10 which connect the first and second main circuits 3, 4 to the counterbalance 7. The speed for the counterbalance valve 7 to return to the neutral position "N" from the first and second positions is made slow by increasing the throttle amounts of these throttles 11, 11. In such an arrangement, however, the time required for the counterbalance 7 to return to the neutral position "N" is delayed. This causes cavitation and the oil hydraulic motor to stop for long periods.

An object of the present invention is therefore to provide a counterbalance valve in which an oil hydraulic motor can slow down without shock, while cavitation is prevented, thus coming to rest in a short period time.

### Disclosure of the Invention

A counterbalance valve of the present invention is constructed in such a manner that a right pressure receiving chamber and a left pressure receiving chamber are connected, through throttle apertures, to ports on a first pump side and a second pump side. These pressure receiving chambers move rightward or leftward along a spool. The connection areas of the throttle apertures, through which the pressure receiving chambers and the ports are connected to each other, are increased or decreased by the movement of the spool. At the beginning of a spool stroke when the spool moves to a neutral position from a first position or a second position, the connection areas become large; in the middle of the stroke, the connection areas become small; and at the end of the stroke, the connection areas again become large. In other words, while the spool is moving to the neutral position from either the first position or the second position, at the beginning of the spool stroke, pressurized oil in either the right pressure receiving chamber or the left pressure receiving chamber flows to either the port on the first pump side or the port on the second pump side. After the spool has moved to some extent, the pressurized oil is caused not to flow smoothly. When the spool moves further, the pressurized oil again flows smoothly. Thus, the speed at which the spool moves is fast at the beginning of the spool stroke, slow in the middle of the stroke, and again fast at the end of the stroke. For the above reasons, the spool can be returned to the neutral position while cavitation is prevented. While at the same time, the ports on the first and second motor sides can be gradually disconnected to the ports on the first and second pump sides.

It is therefore possible to slow down and stop, without a shock, an oil hydraulic motor in a short period of time while cavitation is prevented.

### Brief Description of the Drawings

Figs. 1 through 6 show an embodiment of the present invention.
Fig. 1 is a cross-sectional view of a counterbalance valve;
Figs. 2 through 4 are views explaining the operations of the counterbalance;
Fig. 5 is a diagram of drive oil hydraulic circuitry of an oil hydraulic motor;
Fig. 6 is a view showing an opening area, a switching pressure, and a spool return speed of the counterbalance valve with respect to the stroke of the counterbalance valve; and

Fig. 7 is a diagram of the drive oil hydraulic circuitry of the conventional oil hydraulic motor.

### Best Mode of Carrying out the Invention

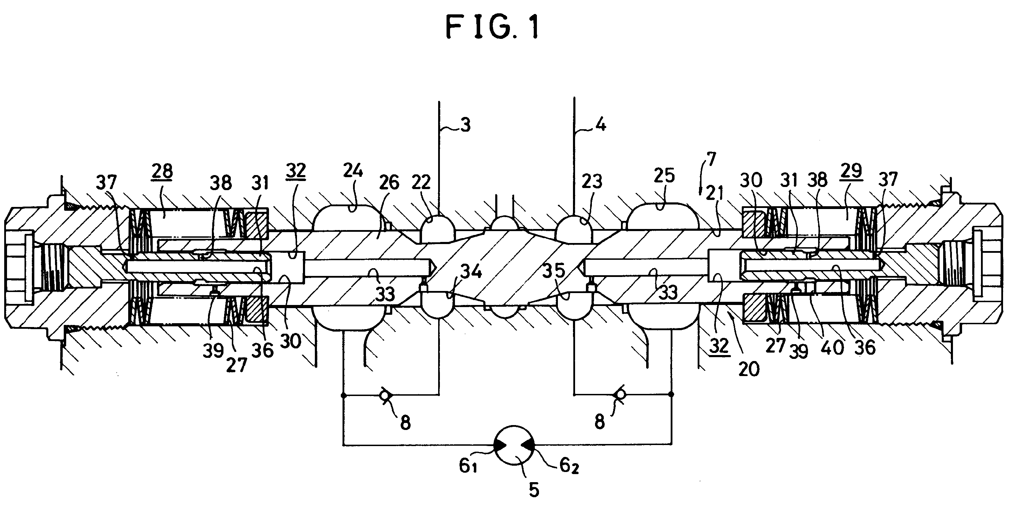

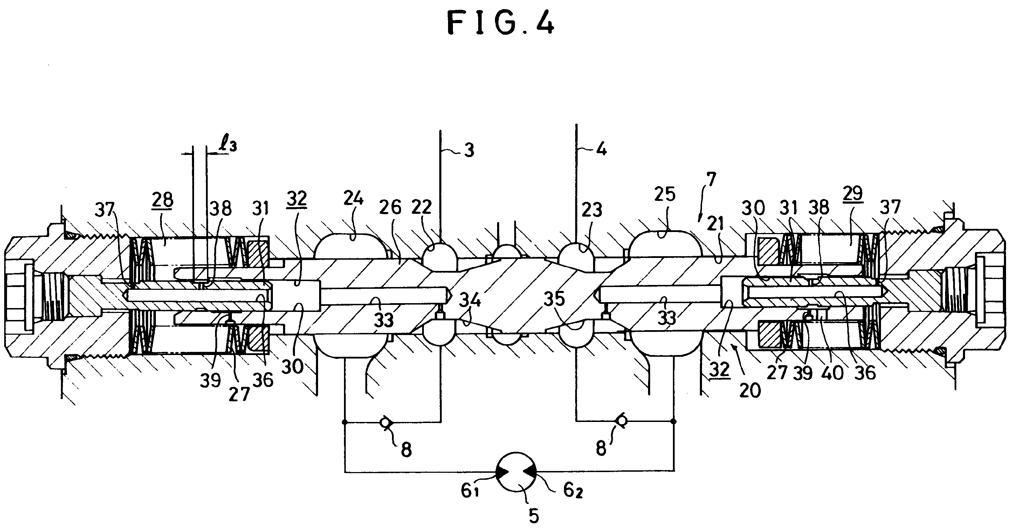

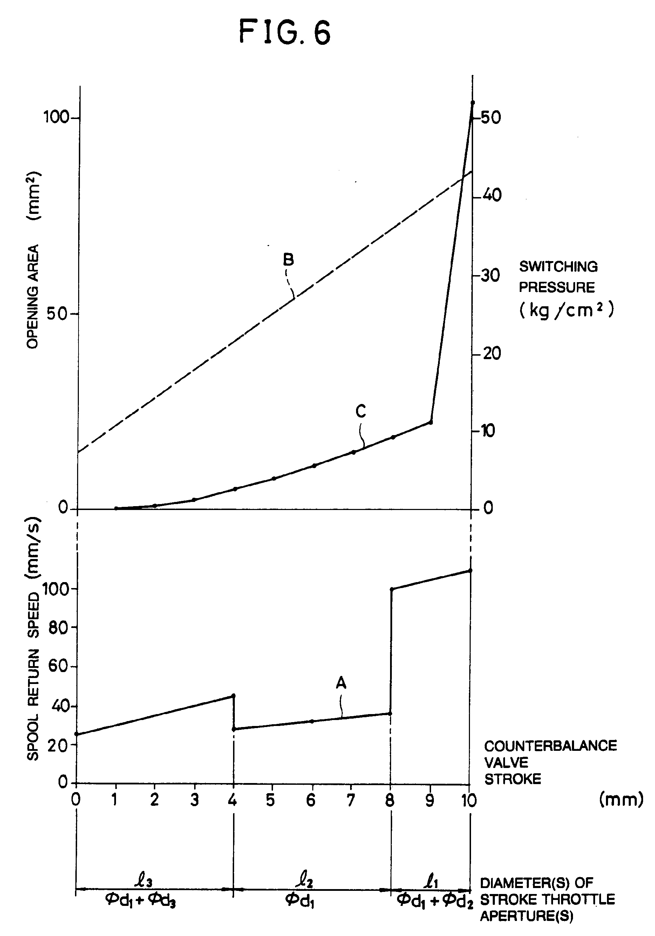

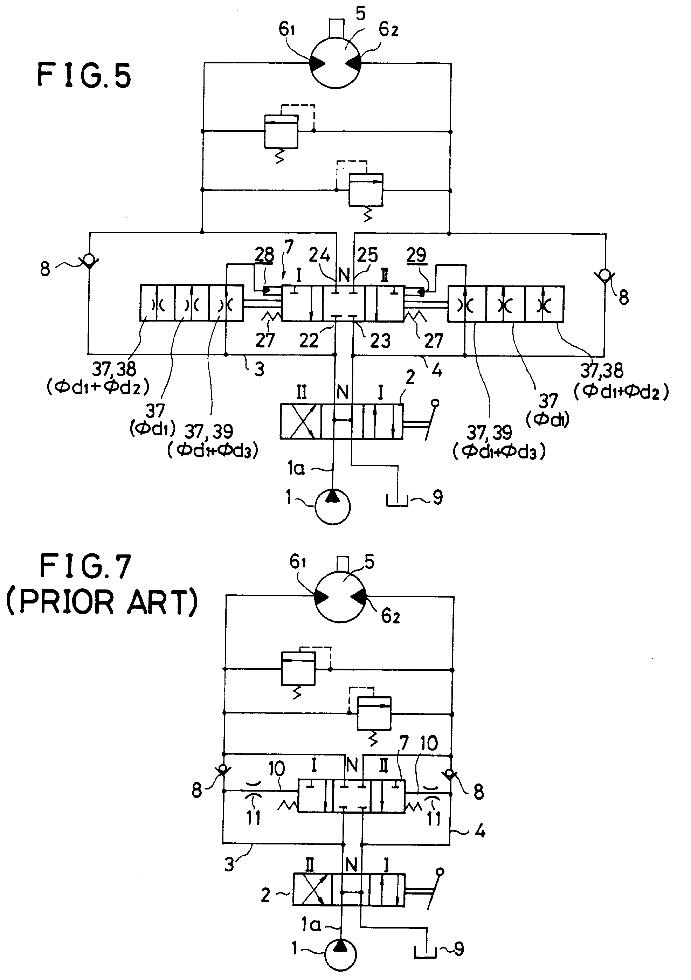

An embodiment of the present invention will now be described in detail with reference to Figs. 1 through 6. The drive oil hydraulic circuitry of an oil hydraulic motor shown in Fig. 5 is constructed in the same manner as is the conventional drive oil hydraulic circuitry shown in Fig. 7, except for a counterbalance valve 7. The same components in Fig. 5 as those in Fig. 7 are designated by like reference characters.

The counterbalance valve 7 has a valve body 20 as shown in detail in Fig. 1. The valve body 20 has a valve hole 21 formed therein. A port 22 on a first pump side, a port 23 on a second pump side, a port 24 on a first motor side, and a port 25 on a second motor side are formed around the valve hole 21. All of these ports are connected and disconnected by a spool 26 slidably fitted into the valve hole 21. The spool 26 is retained in a neutral position "N" by a pair of springs 27, 27, and slides toward a first position "I" and a second position "II" by the force of pressurized oil in a left pressure receiving chamber 28 and a right pressure receiving chamber 29.

Shaft holes 30 are formed on the right and left sides of the spool 26. Pistons 31 are fitted into the shaft holes 30, forming cylinder chambers 32. The cylinder chambers 32 are respectively open to a right small diameter portion 35 and a left small diameter portion 34 of the spool 26. The cylinder chambers 32 are open to these small diameter portions 34, 35 at oil holes 33 formed in the shaft center of the spool 26. Oil holes 36, formed in the shaft centers of the pistons 31, are connected to the cylinder chambers 32 through first throttle apertures 37 and second throttle apertures 38. The shaft holes 30 are open to the right pressure receiving chamber 29 and the left pressure receiving chamber 28 at third throttle apertures 39. The second throttle apertures 38 are connected to and disconnected from the right and left pressure receiving chambers 28, 29, and the third throttle apertures 39.

On the assumption that the diameter of the first throttle aperture 37 is represented by d₁; the diameter of the second throttle aperture 38 is represented by d₂; and the diameter of the third throttle aperture 39 is represented by d₃, then the relationship of these diameters is represented as follows:$\text{d₁ + d₂ > d₁ + d₃ > d₁}$

The details and the operations of the components of the counterbalance valve 7 will now be explained. When an operation valve 2 is in a neutral position, the counterbalance valve 7 is also in the neutral position "N", and so is the spool 26 of the counterbalance valve 7 shown in Fig. 1.

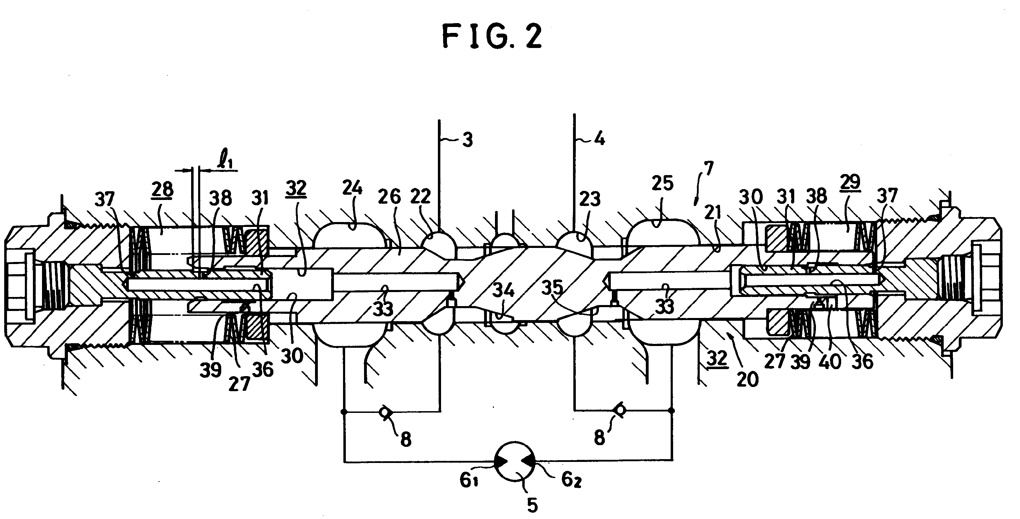

Under the above conditions, when the operation valve 2 is moved to the first position "I", pressurized oil discharged from an oil hydraulic pump 1 is fed to a first main circuit 3. The pressurized oil in the first main circuit 3 then flows into the port 22 on the first pump side, the oil hole 33, and into the cylinder chamber 32. The pressurized oil further flows into the left pressure receiving chamber 28 through the first, second, and third throttle apertures 37, 38, 39. The spool 26 is thereby moved to the right, to the first position shown in Fig. 2, whereby the port 23 on the second pump side and the port 25 on the second motor side are connected to each other. Thus, the pressurized oil is supplied to a first port 6₁ of an oil hydraulic motor 5. It flows from a second port 6₂ of the oil hydraulic motor 5 into a tank 9 through the port 25 on the second motor side and the port 23 on the second pump side. Under the above conditions, the cylinder chamber 32 is opened and connected to the left pressure receiving chamber 28 through the first and second throttle apertures 37, 38.

When the operation valve 2 is returned to the neutral position "N" under the above conditions, the pressurized oil in the first main circuit 3 flows into the tank 9. The pressure falls, so that the spool 26 slides to the left by means of the spring 27. At this time, the pressurized oil in the left pressure receiving chamber 28 flows into the oil hole 36 through the first and second throttle apertures 37, 38. The pressurized oil then flows into the port 22 on the first pump side through the cylinder chamber 32 and the oil hole 33, further flowing into the tank 9 through the first main circuit 3. The area d₁ + d₂ through which the left pressure receiving chamber 28 is connected to the oil hole 36 becomes maximum. The pressurized oil in the left pressure receiving chamber 28 smoothly flows into the tank 9. The spool 26 slides at a high speed.

Now, when the spool 26 moves to the left a distance equal to only ℓ₁, as illustrated in Fig. 2, the second throttle aperture 38 is disconnected from the shaft hole 30. The left pressure receiving chamber 28 is connected to the oil hole 33 only through the first throttle aperture 37. The area d₁ through which the left pressure receiving chamber 28 is connected to the oil hole 33 thus becomes minimum. The pressurized oil in the left pressure receiving chamber 28 gradually flows into the tank 9, whereby the spool 26 slides to the left at a low speed.

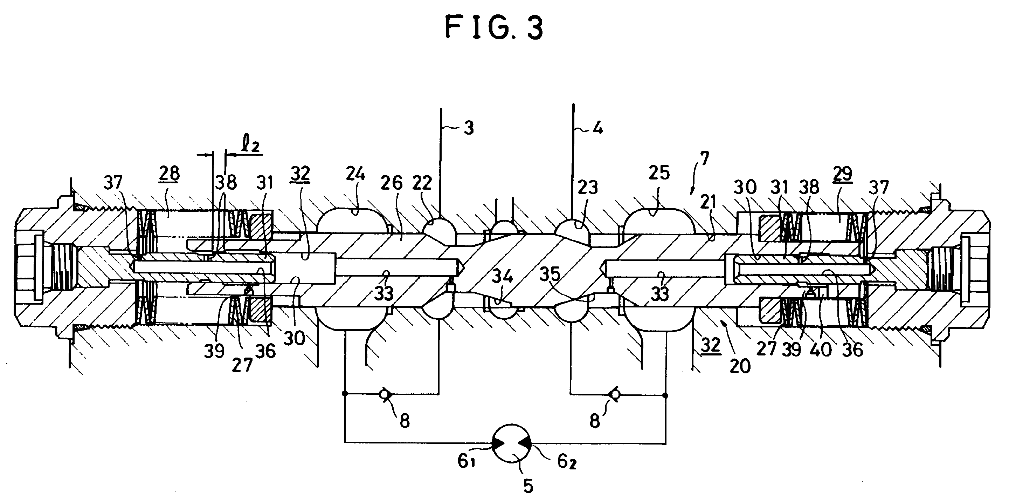

When the spool 26 further slides to the left a distance equal to only ℓ₂, as shown in Fig. 3, the second throttle aperture 38 and the third throttle aperture 39 are connected to each other. The left pressure receiving chamber 28 is connected to the cylinder chamber 32 through the first throttle aperture 37 and the third throttle aperture 39. The area d₁ + d₃ through which the left pressure receiving chamber 28 is connected to the cylinder chamber 32 becomes an intermediate area. The spool 26 thus slides at a speed which is intermediate between the high and low speeds. When the spool 26 moves a distance equal to only ℓ₃, it returns to the neutral position shown in Fig. 1.

As has been described above, when the spool 26 of the counterbalance valve 7 slides to the neutral position from the first position, as indicated by the broken line "A" in Fig. 6, the spool 26 slides at a high speed at the beginning of the stroke, at a low speed at the intermediate period of the stroke, and at an intermediate speed at the end of the stroke. For the above reasons, the opening area of the counterbalance valve 7 and the switching pressure alter, as respectively indicated by the straight line "B" and the broken line "C" in Fig. 6. It is thus possible to prevent cavitation from occurring at the beginning of the stroke while the spool 26 is sliding at a high speed. The spool 26 can slow down, without a shock, during the intermediate period of the stroke while the spool 26 is sliding at a low speed. At the end of the stroke, the spool 26 can slide at an intermediate speed, returning to the neutral position. It is therefore possible to slow down and stop, without a shock, the oil hydraulic motor 5 in a short period of time while cavitation is prevented.

When the spool 26 slides to the neutral position from the second position (when the oil hydraulic motor 5 stops after it has rotated in the opposite direction), it is needless to say that the same operational effects can be attained as when the spool 26 slides to the neutral position from the first position as described above.

### Industrial Applicability

The counterbalance valve of the present invention is constructed in such a way that an oil hydraulic motor can slow down without shock, while cavitation is prevented, thus coming to rest in a short period time. The counterbalance valve is suitable for use in drive oil hydraulic circuitry of an oil hydraulic motor used in travel equipment or the like for construction machinery.

## Claims

1. A counterbalance valve provided between a first main circuit (3) and a second main circuit (4), through which an outlet of a hydraulic pump (1) and an operation valve (2) being connected to a hydraulic motor (5), a spool (26) is provided for the counterbalance valve body (20) so that the spool (26) can slide rightward or leftward, the spool (26) being for connecting a first port (22) on a first pump side and a second port (23) on a second pump side to a third port (24) on a first motor side and a fourth port (25) on a second motor side and for disconnecting these first and second ports (22, 23) on the first and second pump sides from the third and fourth ports (24, 25) on the first and second motor sides, said spool (26) is constructed in such a way that said spool (26) is retained by springs in a neutral position in which the ports are disconnected from each other, and pressurized oil in a left pressure receiving chamber (28) entering through first port (22) moves said spool (26) to a first position in which the second port (23) on the second pump side is connected to the fourth port (25) on the second motor side, whereas pressurized oil in a right pressure receiving chamber (29) entering through second port (23) moves the said spool (26) to a second position in which the first port (22) on the first pump side is connected to the third port (24) on the first motor pump side, characterized in that a plurality of throttle apertures (37, 38, 39), connected to said left pressure receiving chamber (28) and said first port (22) on the first pump side, are arranged between said left pressure receiving chamber (28) and said first port (22) on the first pump side, and a plurality of throttle apertures (37, 38, 39), connected to said right pressure receiving chamber (29) and said second port (23) on the second pump side, are also arranged between said right pressure receiving chamber (29) and said second port (23) on the second pump side, the connection areas of said plurality of throttle apertures (37, 38, 39) are constructed in such a manner that when said spool (26) is in the first and second positions, the connection areas are maximum areas; when said spool (26) moves a little toward the neutral position, the connection areas become minimum areas; and when said spool (26) further moved toward the neutral position, the connection areas become intermediate areas which are intermediate between the maximum areas and the minimum areas.

## Patentansprüche

1. Ein zwischen einem ersten Hauptkreislauf (3) und einem zweiten Hauptkreislauf (4) angeordnetes Gegendruckventil (7), über das eine Abflußöffnung einer Hydraulikpumpe (1) und ein Betätigungsventil (2) mit dem Ölhydraulikmotor (5) verbunden sind, ist für den Ventilkörper (20) des Gegendruckventils vorgesehen, so daß sich der Ventilkolben (26) des Gegendruckventils nach rechts oder links bewegen kann, wobei der Ventilkolben (26) zur Verbindung einer ersten Steueröffnung (22) auf einer ersten Pumpenseite und einer zweiten Steueröffnung (23) auf einer zweiten Pumpenseite mit einer dritten Steueröffnung (24) auf einer ersten Motorseite und einer vierten Steueröffnung (25) auf einer zweiten Motorseite sowie zur Trennung dieser ersten und zweiten Steueröffnungen (22, 23) auf der ersten und zweiten Pumpenseite von den dritten und vierten Steueröffnungen (24, 25) auf der ersten und zweiten Motorseite dient, wobei der Ventilkolben (26) so konstruiert ist, daß der Ventilkolben (26) durch Federn in der Nullstellung gehalten wird, in der die Steueröffnungen voneinander getrennt werden und in einer linken Druckaufnahmekammer (28) befindliches, über eine erste Steueröffnung eintretendes Drucköl den Ventilkolben (26) in eine erste Stellung bewegt, in der die zweite Steueröffnung (23) auf der zweiten Pumpenseite mit der vierten Steueröffnung (25) auf der zweiten Motorseite verbunden wird, während das in einer rechten Druckaufnahmekammer befindliche, durch die zweite Steueröffnung (23) eintretende Drucköl den Ventilkolben (26) in eine zweite Stellung bewegt, in der die erste Steueröffnung (22) auf der ersten Pumpenseite mit der dritten Steueröffnung (24) auf der ersten Motorseite verbunden wird, dadurch gekennzeichnet, daß mehrere, mit der linken Druckaufnahmekammer (28) und der ersten Steueröffnung (22) auf der ersten Pumpenseite verbundene Drosselöffnungen (37, 38, 39) zwischen der linken Druckaufnahmekammer (28) und der ersten Steueröffnung (22) auf der ersten Pumpenseite angeordnet sind, und mehrere mit der rechten Druckaufnahmekammer (29) und der zweiten Steueröffnung (23) auf der zweiten Pumpenseite verbundene Drosselöffnungen (37, 38, 39) zwischen der rechten Druckaufnahmekammer (29) und der zweiten Steueröffnung (23) auf der zweiten Pumpenseite angeordnet sind, wobei die Verbindungsflächen dieser Drosselöffnungen (37, 38, 39) so konstruiert sind, daß die Verbindungsflächen am größten sind, wenn der Ventilkolben (26) sich in der ersten und der zweiten Stellung befindet; bewegt sich der Ventilkolben (26) geringfügig auf die Nullstellung zu, sind die Verbindungsflächen minimal, und wenn sich der Ventilkolben (26) weiter in Richtung der Nullstellung bewegt, weisen die Verbindungsflächen eine mittlere Größe auf, d.h. die Größe der Fläche liegt zwischen der maximalen und der minimalen Fläche.

## Revendications

1. Soupape d'équilibrage prévue entre un premier circuit principal (3) et un second circuit principal (4), à travers lesquels un orifice d'une pompe hydraulique (1) et une soupape de manoeuvre (2) sont reliés à un moteur hydraulique (5), un tiroir (26) est prévu dans le corps (20) de soupape d'équilibrage, de sorte que le tiroir (26) peut coulisser à droite ou à gauche, le tiroir (26) reliant un premier orifice (22) sur un premier côté de pompe et un deuxième orifice (23) sur un second côté de pompe à un troisième orifice (24) sur un premier côté de moteur et un quatrième orifice (25) sur un second côté de moteur, et déconnectant ces premier et deuxième orifices (22,23) sur les premier et second côtés de pompe des troisième et quatrième orifices (24,25) sur les premier et second côtés de moteur, ledit tiroir (26) est construit de telle façon que ledit tiroir (26) soit maintenu par des ressorts dans une position neutre, dans laquelle les orifices sont déconnectés les uns des autres, et de l'huile sous pression, dans une chambre de réception de pression gauche (28), entrant à travers le premier orifice (22), déplace ledit tiroir (26) vers une première position dans laquelle le deuxième orifice (23) sur le second côté de pompe est relié au quatrième orifice (25) sur le second côté du moteur, tandis que l'huile sous pression, dans une chambre de réception de pression droite (29), entrant à travers le deuxième orifice (23), déplace ledit tiroir (26) vers une seconde position dans laquelle le premier orifice (22) sur le premier côté de pompe est relié au troisième orifice (24) sur le premier côté de moteur, caractérisé en ce qu'une pluralité d'ouvertures à étranglement (37,38,39), reliées à ladite chambre de réception de pression gauche (28) et audit premier orifice (22) sur le premier côté de pompe, sont agencées entre ladite chambre de réception de pression gauche (28) et ledit premier orifice (22) sur le premier côté de pompe, et une pluralité d'ouvertures à étranglement (37,38,39), reliées à ladite chambre de réception de pression droite (29) et audit deuxième orifice (23) sur le second côté de pompe, sont également agencées entre ladite chambre de réception de pression droite (29) et ledit deuxième orifice (23) sur le second côté de pompe, les zones de liaison de ladite pluralité d'ouvertures à étranglement (37,38,39) sont réalisées de telle façon que, quand ledit tiroir (26) se trouve dans les première et seconde positions, les zones de liaison sont des zones maximales ; quand ledit tiroir (26) se déplace un peu vers la position neutre, les zones de liaison deviennent des zones minimales ; et quand ledit tiroir (26) est déplacé encore vers la position neutre, les zones de liaison deviennent des zones intermédiaires qui sont intermédiaires entre les zones maximales et les zones minimales.
